(19) Europäisches Patentamt
European Patent Office
Office européen des brevets

(11) Veröffentlichungsnummer: **0 009 696**
**A2**

(12) # EUROPÄISCHE PATENTANMELDUNG

(21) Anmeldenummer: **79103464.8**

(22) Anmeldetag: **17.09.79**

(51) Int. Cl.³: **A 01 N 43/84**
A 01 N 43/40, A 01 N 43/32
A 01 N 41/10
//(A01N43/84, 41/10),
(A01N43/40, 41/10), (A01N43/32,
41/10), (A01N41/10, 33/12)

(30) Priorität: **28.09.78 DE 2842220**

(43) Veröffentlichungstag der Anmeldung:
**16.04.80 Patentblatt 80/8**

(84) Benannte Vertragsstaaten:
**AT BE CH DE FR GB IT NL SE**

(71) Anmelder: **BAYER Aktiengesellschaft**
**Zentralbereich Patente,Marken und Lizenzen**
**Bayerwerk**
**D-5090 Leverkusen 1(DE)**

(72) Erfinder: **Lürssen, Klaus, Dr.**
**August-Kierspel-Strasse 89**
**D-5060 Bergisch Gladbach 2(DE)**

(54) **Mittel zur Wuchshemmung bei Getreide basierend auf einem Gemisch aus einem Halogenäthyl-sulfon und einer 2-Chloräthyl-trimethylammonium-Verbindung oder einer Ammonium-Verbindung oder einer Sulfonium-Verbindung; Verwendung dieser Mittel und Verfahren zu deren Herstellung.**

(57) Die neuen Wirkstoffkombinationen aus
a) einem Halogenethyl-sulfon der Formel

$$Hal\text{-}CH_2\text{-}CH_2\text{-}SO_2\text{-}\underset{\underset{R}{|}}{CH}\text{-}OH \qquad (I)$$

in welcher
Hal für Halogen steht und
R für Wasserstoff oder Alkyl mit 1 bis 6 Kohlenstoffatomen steht,

und
b) einer (2-Chlorethyl)-trimethylammonium-Verbindung der Formel

$$Cl\text{-}CH_2\text{-}CH_2\text{-}\overset{\oplus}{N}(CH_3)_3 \quad A^{\ominus} \qquad (II)$$

in welcher
$A^{\ominus}$ für ein Äquivalent eines Anions einer nicht phytotoxischen Säure steht,

oder
einer Ammonium-Verbindung der Formel

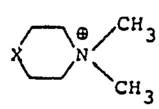 $A'^{\ominus}$ (III)

in welcher
X für $-CH_2-$, Sauerstoff, Schwefel oder die Gruppierung $\overset{\oplus}{S}\text{-}CH_3$ $A'^{\ominus}$ steht und
$A'^{\ominus}$ für ein Äquivalent eines Anions einer nicht phytotoxischen Säure steht,

oder
einer Sulfonium-Verbindung der Formel

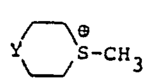 $A''^{\ominus}$ (IV)

in welcher
Y für Sauerstoff, Schwefel oder die

./...

EP 0 009 696 A2

Gruppierung $\overset{\oplus}{S}$-$CH_3$ $A''^{\ominus}$ steht und

$A''^{\ominus}$ für ein Äquivalent eines Anions einer nicht phytotoxischen Säure steht,

sind sehr gut geeignet zur Wuchshemmung bei Getreide.

0009696

BAYER AKTIENGESELLSCHAFT
Zentralbereich
Patente, Marken und Lizenzen

5090 Leverkusen, Bayerwerk
Dü-kl
III

BEZEICHNUNG GEÄNDERT
siehe Titelseite

Mittel zur Wuchshemmung bei Getreide

Die vorliegende Erfindung betrifft neue Wirkstoffkombinationen, die aus einem bekannten Halogenethyl-sulfon einerseits und einer Ammonium-Verbindung oder Sulfonium-Verbindung andererseits bestehen, und besonders gut zur Wuchshemmung bei Getreide geeignet sind.

Es ist bereits bekannt geworden, daß bestimmte Halogenethyl-sulfone, wie z.B. das 2-Chlorethyl-hydroxymethyl-sulfon, zur Wuchshemmung bei Getreide verwendet werden können (vgl. DE-OS 2 675 380). Die Wirksamkeit dieser Stoffe ist jedoch, besonders bei niedrigen Aufwandmengen, nicht immer befriedigend.

Weiterhin ist bereits bekannt, daß bestimmte Ammonium-Verbindungen und Sulfonium-Verbindungen in der Lage sind, das Längenwachstum der Halme von Getreide zu

hemmen (vgl. US-PS 3 156 554, US-PS 3 905 798, US-PS 3 542 538, DE-OS 2 217 697 und DE-OS 2 331 185). In manchen Fällen, vor allem bei niedrigen Aufwandmengen, läßt allerdings auch die Wirksamkeit dieser Produkte zu wünschen übrig.

Es wurde nun gefunden, daß die neuen Wirkstoffkombinationen aus

a) einem Halogenethyl-sulfon der Formel

$$Hal-CH_2-CH_2-SO_2-\underset{R}{\underset{|}{CH}}-OH \qquad (I)$$

in welcher

Hal für Halogen steht und

R für Wasserstoff oder Alkyl mit 1 bis 6 Kohlenstoffatomen steht,

und

b) einer (2-Chlorethyl)-trimethylammonium-Verbindung der Formel

$$Cl-CH_2-CH_2-\overset{\oplus}{N}(CH_3)_3 \qquad A^{\ominus} \qquad (II)$$

in welcher

$A^{\ominus}$ für ein Äquivalent eines Anions einer nicht phytotoxischen Säure steht,

oder
einer Ammonium-Verbindung der Formel

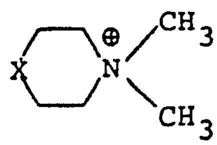

$A'^{\ominus}$ (III)

in welcher

X für $-CH_2-$, Sauerstoff, Schwefel oder die Gruppierung $\overset{\oplus}{S}-CH_3$ $A'^{\ominus}$ steht und

$A'^{\ominus}$ für ein Äquivalent eines Anions einer nicht phytotoxischen Säure steht,

oder
einer Sulfonium-Verbindung der Formel

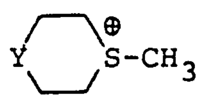

$A''^{\ominus}$ (IV)

in welcher

Y für Sauerstoff, Schwefel oder die Gruppierung $\overset{\oplus}{S}-CH_3$ $A''^{\ominus}$ steht und

$A''^{\ominus}$ für ein Äquivalent eines Anions einer nicht phytotoxischen Säure steht,

sehr gut zur Wuchshemmung bei Getreide geeignet sind.

Überraschenderweise ist die wuchshemmende Wirkung der erfindungsgemäßen Wirkstoffkombinationen bei Getreide wesentlich höher als die Summe der Wirkungen der einzelnen Wirkstoffe. Es liegt also ein nicht vorhersehbarer echter synergistischer Effekt vor und nicht nur eine Wirkungsergänzung. Die Wirkstoffkombinationen stellen somit eine wertvolle Bereicherung der Technik dar.

Die in den erfindungsgemäßen Wirkstoffkombinationen enthaltenen Halogenethyl-sulfone sind durch die Formel (I) allgemein definiert. In dieser Formel steht Hal vorzugsweise für Chlor oder Brom. R steht vorzugsweise für Wasserstoff oder geradkettiges oder verzweigtes Alkyl mit 1 bis 4 Kohlenstoffatomen, wobei Methyl, Ethyl, n-Propyl und iso-Propyl speziell erwähnt seien.

Als Beispiele für Halogenethyl-sulfone der Formel (I) seien im einzelnen genannt:

2-Chlorethyl-hydroxymethyl-sulfon
2-Bromethyl-hydroxymethyl-sulfon
2-Chlorethyl-1-hydroxyethyl-sulfon
2-Bromethyl-1-hydroxyethyl-sulfon
2-Chlorethyl-1-hydroxy-n-propyl-sulfon
2-Bromethyl-1-hydroxy-n-propyl-sulfon
2-Chlorethyl-1-hydroxy-n-butyl-sulfon
2-Bromethyl-1-hydroxy-n-butyl-sulfon
2-Chlorethyl-1-hydroxy-iso-butyl-sulfon
2-Bromethyl-1-hydroxy-iso-butyl-sulfon.

Die Halogenethyl-sulfone der Formel (I) sind bereits bekannt (vgl. DE-OS 2 657 380).

Die (2-Chlorethyl)-trimethylammonium-Verbindungen, die in den erfindungsgemäßen Wirkstoffkombinationen enthalten sein können, sind durch die Formel (II) definiert. In dieser Formel steht $A^{\ominus}$ vorzugsweise für Chlorid und Bromid. - Als Beispiele für Verbindungen der Formel (II) seien im einzelnen genannt:

(2-Chlorethyl)-trimethylammoniumchlorid
(2-Chlorethyl)-trimethylammoniumbromid

Die (2-Chlorethyl)-trimethylammonium-Verbindungen der Formel (II) sind bekannt (vgl. US-PS 3 156 554).

Die anderen Ammonium-Verbindungen, die in den erfindungsgemäßen Wirkstoffkombinationen enthalten sein können, sind durch die Formel (III) definiert. In dieser Formel hat X die oben angegebenen Bedeutungen. $A'^{\ominus}$ steht vorzugsweise für Halogenid, insbesondere Chlorid, Bromid und Jodid, weiterhin für Tetrafluoroborat und Alkylsulfat, insbesondere Methylsulfat und Ethylsulfat.

Als Beispiele für Verbindungen der Formel (III) seien im einzelnen genannt:

1,1-Dimethyl-piperidinium-chlorid
1,1-Dimethyl-piperidinium-bromid
1,1-Dimethyl-morpholinium-chlorid
1,1-Dimethyl-morpholinium-bromid
1,1-Dimethyl-thiamorpholinium-chlorid
1,1-Dimethyl-thiamorpholinium-bromid

1-Methylsulfonia-4-dimethyl-ammonia-cyclohexan-dichlorid
1-Methylsulfonia-4-dimethyl-ammonia-cyclohexan-di-methosulfat

Die Ammonium-Verbindungen der Formel (III) sind bekannt (vgl. US-PS 3 905 798, US-PS 3 542 538, DE-OS 2 331 185, DE-OS 2 207 575 und DE-AS 1 642 215).

Die Sulfonium-Verbindungen, die in den erfindungsgemäßen Wirkstoffkombinationen enthalten sein können, sind durch die Formel (IV) definiert. In dieser Formel hat Y die oben angegebenen Bedeutungen. $A''^{\ominus}$ steht vorzugsweise für Halogenid, insbesondere Chlorid, Bromid und Jodid, weiterhin für Tetrafluoroborat und Alkylsulfat, insbesondere Methylsulfat und Ethylsulfat.

Als Beispiele für Verbindungen der Formel (IV) seien im einzelnen genannt:

1-Methylsulfonia-4-oxa-cyclohexan-bromid
1-Methylsulfonia-4-oxa-cyclohexan-chlorid
1-Methylsulfonia-4-oxa-cyclohexan-jodid
1-Methylsulfonia-4-thia-cyclohexan-chlorid
1-Methylsulfonia-4-thia-cyclohexan-bromid
1-Methylsulfonia-4-thia-cyclohexan-jodid
1,4-Dimethyl-1,4-disulfonia-cyclohexan-dichlorid
1,4-Dimethyl-1,4-disulfonia-cyclohexan-di-methosulfat

Die Sulfonium-Verbindungen der Formel (IV) sind bekannt (vgl. DE-OS 2 217 697 und DE-OS 2 331 185).

Der synergistische Effekt zeigt sich insbesondere dann, wenn die Wirkstoffe in den erfindungsgemäßen Wirkstoffkombinationen in bestimmten Verhältnissen vorliegen. Jedoch können die Gewichtsverhältnisse der Wirkstoffe in den Wirkstoffkombinationen in relativ großen Bereichen schwanken. Im allgemeinen entfallen auf 1 Gewichtsteil an einem Wirkstoff der Formel (I) 0,04 bis 2 Gewichtsteile, vorzugsweise 0,07 bis 0,5 Gewichtsteile an einem Wirkstoff der Formel (II), (III) oder (IV).

Die erfindungsgemäßen Wirkstoffkombinationen zeigen eine starke wuchshemmende Wirksamkeit bei Getreide. Dies ist deshalb von Bedeutung, weil dadurch auch unter ungünstigen Witterungsverhältnissen ein Umknicken der Halme ("Lagern") des Getreides weitgehend vermieden wird. Durch Anwendung der erfindungsgemäßen Wirkstoffkombinationen ist es ferner möglich, eine Düngung mit größeren Mengen Stickstoffdünger auszubringen ohne Gefahr zu laufen, daß das Getreide lagert. Es lassen sich so durch die Anwendung der erfindungsgemäßen Wirkstoffkombinationen in Verbindung mit der Ausbringung einer größeren Düngermenge Mehrerträge erzielen.

Unter Getreide sind im vorliegenden Fall alle üblichen Getreidearten zu verstehen. Hierzu gehören vorzugsweise Hafer, Roggen, Gerste, Weizen und Reis.

Die Wirkstoffkombinationen können in die üblichen Formulierungen übergeführt werden, wie Lösungen, Emulsionen, Suspensionen, Pulver und Granulate.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgiermittel kommen in Frage: z.B. nichtionogene und anionische Emulgatoren, wie Polyoxyäthylen-Fettsäure-

Ester, Polyoxyäthylen-Fettalkohol-Äther, z.B. Alkylaryl-polyglykol-äther, Alkylsulfonate, Alkylsulfate, Aryl-sulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln.

Die Wirkstoffkombinationen können als solche, in Form ihrer Formulierungen oder der daraus bereiteten Anwen-dungsformen, wie gebrauchsfertige Lösungen, emulgier-bare Konzentrate, Emulsionen, Suspensionen Spritzpul-ver, lösliche Pulver und Granulate, angewendet werden.

Die Anwendung geschieht in üblicher Weise, z.B. durch Gießen, Verspritzen, Versprühen, Verstreuen, usw.

Die Wirkstoffkonzentrationen können in einem größeren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, daß die Anwendung der Wirkstoffkombinationen in einem bevorzugten Zeitraum vorgenommen wird, dessen genaue Abgrenzung sich nach den klimatischen und vegetativen Gegebenheiten richtet.

Die gute wuchshemmende Wirkung der erfindungsgemäßen Wirkstoffkombination bei Getreide geht aus den nachfolgenden Beispielen hervor. Während die einzelnen Wirkstoffe in der wuchshemmenden Wirkung Schwächen aufweisen, zeigen die Kombinationen eine Wirkung, die über eine einfache Wirkungssummierung hinausgeht.

Ein synergistischer Effekt liegt bei Wuchshemmern immer dann vor, wenn die wuchshemmende Wirkung der Wirkstoffkombination größer ist als die der einzeln applizierten Wirkstoffe.

Die zu erwartende Wirkung für eine gegebene Kombination zweier Wuchshemmer kann (vgl. Colby, S. R., "Calculating synergistic and antagonistic responses of herbicide combinations", Weeds 15, Seiten 20 - 22, 1967) wie folgt berechnet werden:

Wenn X = % Wuchshemmung durch Wirkstoff A bei p kg/ha Aufwandmenge,

und Y = % Wuchshemmung durch Wirkstoff B bei q kg/ha Aufwandmenge,

und E = die erwartete Wuchshemmung durch die Wirkstoffe A und B bei p und q kg/ha Aufwandmenge,

dann ist

$$E = X + Y - \frac{X \cdot Y}{100} .$$

Ist die tatsächliche Wuchshemmung größer als berechnet, so ist die Kombination in ihrer Wirkung überadditiv, d. h. es liegt ein synergistischer Effekt vor.

Aus den Tabellen der Beispiele 1 und 2 geht eindeutig hervor, daß die gefundene wuchshemmende Wirkung der erfindungsgemäßen Wirkstoffkombinationen bei Getreide größer ist als die berechnete, d.h., daß ein echter synergistischer Effekt vorliegt.

In den folgenden Beispielen werden die nachstehend angegebenen Wirkstoffe eingesetzt:

(I-1) = $Cl-CH_2-CH_2-SO_2-CH_2-OH$
2-Chlorethyl-hydroxymethyl-sulfon

(II-1)= $Cl-CH_2-CH_2-\overset{\oplus}{N}(CH_3)_3 \quad Cl^{\ominus}$
(2-Chlorethyl)-trimethyl-ammonium-chlorid

Beispiel 1

Wuchshemmung bei Wintergerste

Lösungsmittel: 30 Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf. Bei Wirkstoffkombinationen wird der zweite Wirkstoff in gleicher Weise gelöst und im gewünschten Verhältnis der Lösung des ersten Wirkstoffes zugesetzt. Mit Wasser wird bis zur gewünschten Verdünnung aufgefüllt.

Wintergerste der Sorte Vogelsanger Gold wird im Freiland in üblicher Weise angezogen. Beim Erscheinen des letzten Blattes werden die Pflanzen mit den Wirkstoffzubereitungen mit einem Spritzgerät mit Flachstrahldüsen besprüht. Die Wasseraufwandmenge beträgt 600 l/ha.

Nach Abschluß des vegetativen Wachstums wird die Wuchshöhe in den einzelnen Parzellen gemessen und in % der Wuchshöhe der unbehandelten Kontrollen berechnet. Es bedeuten 100 % den Stillstand des Wachstums und 0 % ein Wachstum entsprechend dem der Kontrollpflanzen.

Wirkstoffe, Aufwandmengen und Resultate gehen aus der folgenden Tabelle hervor.

## Tabelle 1

### Wuchshemmung bei Wintergerste

| Wirkstoff bzw. Wirkstoffkombination | Aufwandmenge kg/ha | Wuchshemmung in % gef.x) | ber x) |
|---|---|---|---|
| (I-1) | 2 | 5 | |
| (bekannt) | 4 | 12 | |
| (II-1) | 0,35 | 1 | |
| (bekannt) | 0,7 | 2 | |
| (I-1)+(II-1) | 2 + 0,35 | 8 | 5,95 |
| (erfindungsgemäß) | 4 + 0,35 | 14 | 12,9 |
| | 2 + 0,7 | 10 | 6,9 |
| | 4 + 0,7 | 15 | 13,76 |

x) gef. = gefundene Wuchshemmung

x) ber. = nach der auf Seite 11 angegebenen Formel berechnete Wuchshemmung.

Beispiel 2

Wuchshemmung bei Winterweizen

Lösungsmittel: 30 Gewichtsteile Dimethylformamid
Emulgator: 1 Gewichtsteil Polyoxyethylen-Sorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf. Bei Wirkstoffkombinationen wird der zweite Wirkstoff in gleicher Weise gelöst und im gewünschten Verhältnis der Lösung des ersten Wirkstoffes zugesetzt. Mit Wasser wird bis zu gewünschten Verdünnung aufgefüllt.

Winterweizen der Sorte Kranich wird im Freiland in üblicher Weise angezogen. Zu verschiedenen Entwicklungszeitpunkten des Getreides werden die Wirkstoffzubereitungen mit einem Spritzgerät mit Flachstrahldüsen auf die Pflanzen ausgebracht. Die Wasseraufwandmenge beträgt 600 l/ha. Nach Abschluß des vegetativen Wachstums wird die Wuchshöhe des Getreides in den Parzellen gemessen und mit der Wuchshöhe der unbehandelten Kontrollen verglichen. Es bedeuten 100 % den Stillstand des Wachstums und 0 % ein Wachstum entsprechend dem der Kontrollpflanzen.

Wirkstoffe, Aufwandmengen, Entwicklungsstadien der Pflanzen und Resultate gehen aus der folgenden Tabelle hervor.

Tabelle 2

Wuchshemmung bei Winterweizen

| Wirkstoff bzw. Wirkstoff-kombination | Aufwand-menge kg/ha | Stadium der Pflanzen bei der Behand-lung | Wuchshemmung in % gef.x) | ber.x) |
|---|---|---|---|---|
| (I-1) (bekannt) | 2 | 1. Knoten-stadium | 1 | |
| (II-1) (bekannt) | 0,7 | 1. Knoten-stadium | 20 | |
| (I-1)+(II-1) (erfindungs-gemäß) | 2 + 0,7 | 1. Knoten-stadium | 25 | 20,8 |
| (I-1) (bekannt) | 4 | 2. Knoten-stadium | 1 | |
| (II-1) (bekannt) | 0,7 | 2. Knoten-stadium | 19 | |
| (I-1)+(II-1) (erfindungs-gemäß) | 4 + 0,7 | 2. Knoten-stadium | 27 | 19,8 |

x) gef. = gefundene Wuchshemmung

x) ber. = nach der auf Seite 11 angegebenen Formel berechnete Wuchshemmung.

Patentansprüche

1. Mittel zur Wuchshemmung bei Getreide, gekennzeichnet durch einen Gehalt an einer Wirkstoffkombination bestehend aus

a) einem Halogenethyl-sulfon der Formel

$$Hal-CH_2-CH_2-SO_2-\underset{R}{\underset{|}{CH}}-OH \qquad (I)$$

in welcher

Hal für Halogen steht und

R für Wasserstoff oder Alkyl mit 1 bis 6 Kohlenstoffatomen steht,

und

b) einer (2-Chlorethyl)-trimethylammonium-Verbindung der Formel

$$Cl-CH_2-CH_2-\overset{\oplus}{N}(CH_3)_3 \qquad A^{\ominus} \qquad (II)$$

in welcher

$A^{\ominus}$ für ein Äquivalent eines Anions einer nicht phytotoxischen Säure steht,

oder

einer Ammonium-Verbindung der Formel

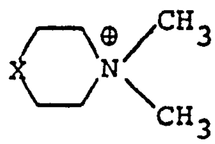

$A'^{\ominus}$ (III)

in welcher

X für $-CH_2-$, Sauerstoff, Schwefel oder die Gruppierung $\overset{\oplus}{S}-CH_3$ $A'^{\ominus}$ steht und

$A'^{\ominus}$ für ein Äquivalent eines Anions einer nicht phytotoxischen Säure steht,

oder

einer Sulfonium-Verbindung der Formel

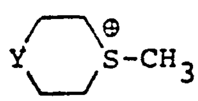

$A''^{\ominus}$ (IV)

in welcher

Y für Sauerstoff, Schwefel oder die Gruppierung $\overset{\oplus}{S}-CH_3$ $A''^{\ominus}$ steht und

$A''^{\ominus}$ für ein Äquivalent eines Anions einer nicht phytotoxischen Säure steht.

2. Mittel gemäß Anspruch 1, dadurch gekennzeichnet, daß in den Wirkstoffkombinationen das Gewichtsverhältnis von einem Wirkstoff der Formel (I) zu einem Wirkstoff der Formel (II), (III) oder (IV) zwischen 1:0,04 bis 1:2, vorzugsweise zwischen 1:0,07 bis 1:0,5 liegt.

3. Verfahren zur Wuchshemmung bei Getreide, dadurch gekennzeichnet, daß man Wirkstoffkombinationen gemäß Anspruch 1 oder 2 auf das Getreide oder dessen Lebensraum einwirken läßt.

4. Verwendung von Wirkstoffkombinationen gemäß Anspruch 1 oder 2 zur Wuchshemmung bei Getreide.

5. Verfahren zur Herstellung von Mitteln zur Wuchshemmung bei Getreide, dadurch gekennzeichnet, daß man Wirkstoffkombinationen gemäß Anspruch 1 oder 2 mit Streckmitteln und/oder oberflächenaktiven Mitteln vermischt.